# EUROPÄISCHE PATENTSCHRIFT

(11) **EP 1 681 478 B1**
(45) Veröffentlichungstag und Bekanntmachung des Hinweises auf die Patenterteilung: **21.01.2009**
(21) Anmeldenummer: 06008875.4
(22) Anmeldetag: 10.12.2002
(51) Int. Cl.: F16C 11/06

(54) **Kugelgelenk**
Ball joint
Articulation à rotule

(30) Priorität: 12.12.2001 DE 20120251 U
(43) Veröffentlichungstag der Anmeldung: 19.07.2006
(62) Teilanmeldung aus: 02795145.8
(73) Patentinhaber: TRW Automotive GmbH, 73553 Alfdorf (DE)
(72) Erfinder: Heep, Theo, 47800 Krefeld (DE)
(74) Vertreter: Prinz & Partner

(56) Entgegenhaltungen:
- DE-A1- 3 018 187
- FR-A- 1 153 763
- US-A- 3 284 115
- PATENT ABSTRACTS OF JAPAN Bd. 1998, Nr. 06, 30. April 1998 (1998-04-30) -& JP 10 037944 A (OTIX:KK), 13. Februar 1998 (1998-02-13)

## Beschreibung

Die Erfindung betrifft ein Kugelgelenk nach dem Oberbegriff des Anspruchs 1.

Ein Kugelgelenk mit einem Kugelzapfen, einem von einer Wandung begrenzten Aufnahmeraum für den Kugelzapfen und einem Anschlußbauteil aus Blech, wobei die Wandung des Aufnahmeraumes einstückig mit dem Anschlußbauteil ausgeführt ist, ist aus der japanischen Patentanmeldung mit der Offenlegungs-nummer 10-37944 (Anmeldenummer 08214384) bekannt. Das Anschlußbauteil ist hier ein tragendes Bauteil einer Fahrzeugaufhängung, beispielsweise ein Querlenker, und die Wandung des Aufnahmeraumes ist dadurch gebildet, daß das Anschlußbauteil napfartig umgebogen ist. Der vom Boden des Napfes abgewandte Rand der Wandung des Aufnahmeraumes wird radial nach innen umgebogen, nachdem in den Aufnahmeraum eine Lagerschale sowie der Kugelzapfen eingesetzt sind. Der Kugelzapfen ist dann fest in dem Aufnahmeraum gehalten.

Ein Kugelgelenk mit den Merkmalen des Oberbegriffs des Anspruchs 1 ist in der FR-A-1 153 763 gezeigt. Das Kugelgelenk weist einen von einer Wandung begrenzten Aufnahmeraum für einen Kugelzapfen auf, wobei die Wandung einstückig mit einem Anschlußbauteil ausgeführt ist. Der Aufnahmeraum hat zwei offene Enden, von denen eines durch eine Platte geschlossen ist.

Aus der DE-A-30 18 187 ist ein Kugelgelenk mit einer Einsatz-Gelenkschale bekannt, die in einer an diese angepaßte Aufnahme eines Führungselements eingesetzt und darin befestigt ist. Die Schale weist einen zylindrischen Mantelabschnitt und zwei kalottenartige Verjüngungsabschnitte auf, um den Gelenkkopf gegen axiale Verschiebungen zu sichern. Ein Endabschnitt der Schale bildet einen Umbördelungskragen, mittels dem die Schale in der Aufnahme des Führungselements befestigt ist.

Die Aufgabe der Erfindung besteht darin, ein Kugelgelenk der eingangs genannten Art dahingehend weiterzubilden, daß der Kugelkopf im Aufnahmeraum sicher gehalten ist.

Zu diesem Zweck ist gemäß der Erfindung ein Kugelgelenk mit den Merkmalen des Anspruchs 1 vorgesehen. Die erfindungsgemäße Gestaltung ermöglicht, den Kugelzapfen sowohl in der einen als auch in der anderen Richtung aus der Aufnahme herausragen zu lassen. Schließlich ergeben sich Vorteile bei der Montage des Kugelzapfens im Aufnahmeraum. Im Stand der Technik nach der JP-A-10-37944 ist die Wandung des Aufnahmeraumes an der offenen Seite, also an der vom Boden des Aufnahmeraumes abgewandten Seite, doppellagig ausgeführt. Nach dem Einsetzen des Kugelzapfens in die Aufnahme muß notwendigerweise der doppellagige Teil der Wandung radial nach innen umgebogen werden, um den Aufnahmeraum so weit zu verschließen, daß der Kugelzapfen fest im Aufnahmeraum aufgenommen ist. Das Verformen der doppellagigen Wandung ist jedoch ein vergleichsweise schwer zu beherrschender Vorgang, da die im Inneren des Aufnahmeraumes angeordnete Lagerschale beim Umbiegen der Wandung nicht zerquetscht werden darf. Bei dem erfindungsgemäßen Kugelgelenk kann dagegen das doppellagige Ende des Aufnahmeraumes geeignet verformt werden, bevor der Kugelzapfen und die Lagerschale eingesetzt werden. Dann kann der Kugelzapfen von dem anderen, offenen Ende des Aufnahmeraumes montiert werden, und abschließend kann das einlagig ausgeführte Ende des Aufnahmeraumes verschlossen werden.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 ein Anschlußbauteil mit Aufnahmeraum für den Kugelzapfen in einem ersten Zwischenschritt während der Herstellung;
- Figur 2 das Anschlußbauteil von Figur 1 in einem weiteren Zwischenschritt;
- Figur 3 in einer Schnittansicht eine Ausführungsform eines nicht erfindungsgemäßen Kugelgelenks, wobei rechts und links der Mittellinie unterschiedliche Varianten gezeigt sind;
- Figur 4 in einer Schnittansicht eine weitere Ausführungsform eines nicht erfindungsgemäßen Kugelgelenks, wobei rechts und links der Mittellinie unterschiedliche Varianten gezeigt sind;
- Figur 5 in einer Schnittansicht eine erfindungsgemäße Ausführungsform eines Kugelgelenks.

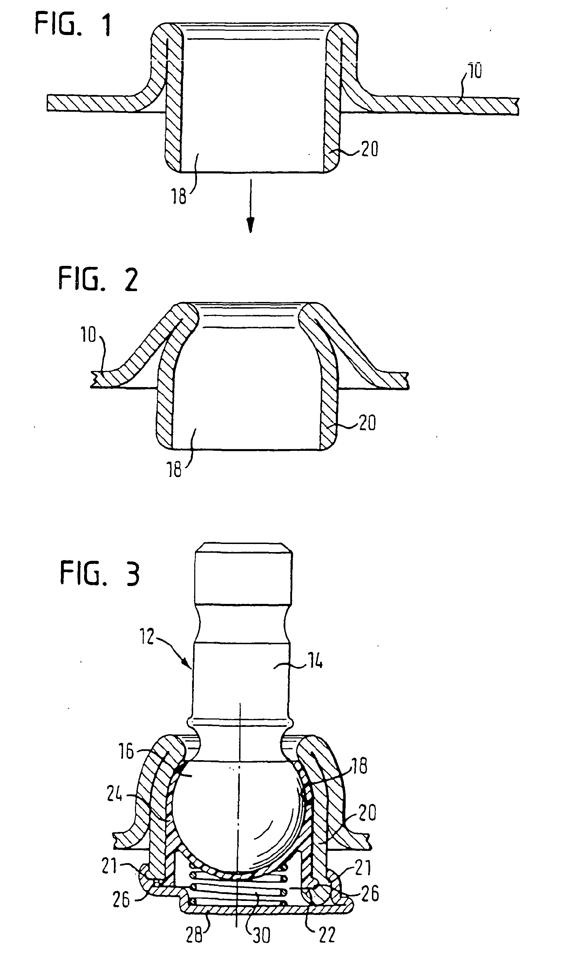

In Figur 1 ist ein Anschlußbauteil 10 gezeigt, das aus Blech besteht und beispielsweise ein Querlenker eines Radaufhängungssystems für ein Kraftfahrzeug ist. Am Anschlußbauteil 10 soll ein Kugelgelenk vorgesehen sein, das im wesentlichen aus einem Kugelzapfen 12 (siehe Figur 3) mit einem Anschlußbolzen 14 und einem Kugelkopf 16 besteht, der in einem Aufnahmeraum 18 angeordnet ist. Der Aufnahmeraum ist begrenzt von einer Wandung 20, die einstückig mit dem Anschlußbauteil 10 ausgebildet ist. Zu diesem Zweck wird an der Stelle des Anschlußbauteils, an dem das Kugelgelenk anzuordnen ist, zunächst das Material des Anschlußbauteils 10 durch einen Stülpprozeß in eine topf- oder napfähnliche Struktur umgeformt, die sich zu beiden Seiten der Blechebene erstreckt. Dann wird der Boden des so entstandenen Topfes ausgestanzt, so daß eine rohrförmige Wandung 20 erhalten wird. Dieser Zustand ist in Figur 1 gezeigt. Die Wandung 20 definiert den Aufnahmeraum 18, der somit an beiden axialen Enden offen ist. Die Wandung 20 ist in dem Bereich, der oberhalb der vom Blech des Anschlußbauteils 10 definierten Ebene liegt, zweilagig ausgeführt, während der unterhalb dieser Ebene liegende Abschnitt der Wandung 20 einlagig ausgeführt ist.

Nach dem Ausstanzen des Bodens wird das axiale Ende der Wandung 20, an dem diese zweilagig ausgebildet ist, radial einwärts verformt, so daß die in Figur 2 gezeigte Gestalt der Wandung 20 erhalten wird. Die Wandung kann vergleichsweise problemlos verformt werden, da ein geeigneter Gegenhalter in das Innere des Aufnahmeraumes 18 eingebracht werden kann. Am entgegengesetzten axialen Ende der Wandung 20, also am einlagig ausgeführten Ende, wird die Wandung so verformt, daß ein radialer, umlaufender Absatz 21 gebildet ist. Dieser ist bei der in Figur 3 links der Mittellinie gezeigten Variante als vorstehender Kragen ausgebildet, während er bei der rechts der Mittellinie gezeigten Variante an der Rückseite eines Wulstes gebildet ist. Zusätzlich ist auf der Innenseite des Wulstes eine umlaufende Nut 22 vorgesehen.

Anschließend wird auf dem Kugelkopf 16 des Kugelzapfens 12 eine Lagerschale 24 montiert, und der Kugelzapfen 12 wird zusammen mit der Lagerschale 24 in den Aufnahmeraum 18 eingesetzt. Die Lagerschale 24 ist an ihrem vom Anschlußbolzen 14 abgewandten Ende mit einem radial vorstehenden Kragen 26 versehen, der bei der in Figur 3 links der Mittellinie gezeigten Variante auf der Stirnseite der Wandung 20 anliegt, während er bei der rechts der Mittellinie gezeigten Variante in die Nut 22 eingreift. Bei beiden Varianten ist die Lagerschale 24 auf diese Weise in axialer Richtung fixiert. Abschließend wird ein Deckel 28 angebracht, der den Aufnahmeraum 18 verschließt, wobei zwischen dem Deckel 28 und der Lagerschale 24 noch eine Druckfeder 30 eingesetzt wird. Der Deckel 28 wird bei der in Figur 3 rechts der Mittellinie gezeigten Variante an der Wandung 20 dadurch befestigt, daß er hinter dem Absatz 21 verstemmt wird. Bei der in Figur 3 links der Mittellinie gezeigten Variante wird der Deckel 28 mit der Wandung verschweißt.

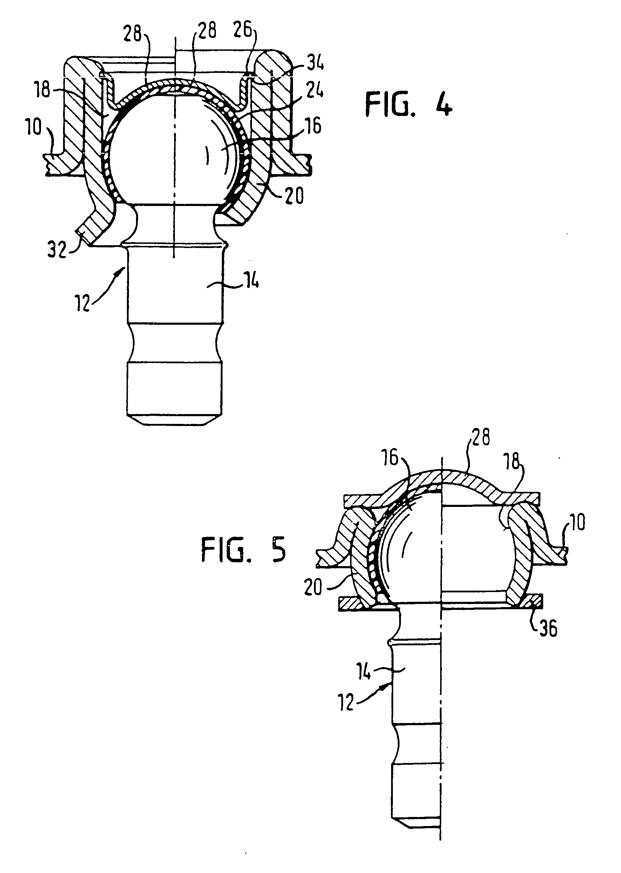

In Figur 4 ist eine zweite Ausführungsform eines Kugelgelenks gezeigt. Für die von der ersten Ausführungsform bekannten Bauteile werden dieselben Bezugszeichen verwendet, und es wird auf die obigen Erläuterungen verwiesen.

Im Unterschied zur ersten Ausführungsform ist bei der zweiten Ausführungsform der Kugelzapfen 12 so eingesetzt, daß der Anschlußbolzen 14 durch das einlagig ausgeführte Ende der Wandung 20 hervorsteht. Dieses Ende ist geeignet nach innen gebogen, so daß der Kugelkopf 16 sicher im Aufnahmeraum 18 gehalten ist. Bei der links der Mittellinie gezeigten Variante ist das freie Ende der Wandung 20 mit einer Schürze 32 versehen, die radial nach außen abgebogen ist. An der Schürze 32 kann ein Dichtungsbalg befestigt werden.

Am anderen axialen Ende der Wandung 20 ist bei der zweiten Ausführungsform ein innenliegender Absatz 34 vorgesehen, an dem der Kragen 26 des Deckels 28 anliegt (siehe die Darstellung rechts der Mittellinie). Nach dem Einsetzen des Deckels 28 wird das axiale Ende der doppellagigen Wandung 20 umgeformt, so daß der Kragen 26 des Deckels 28 nach Art einer Bördelung fest eingeklemmt wird (siehe die Darstellung links der Mittellinie). Das Kugelgelenk ist nun vollständig verschlossen.

In Figur 5 ist eine erfindungsgemäße Ausführungsform des Kugelgelenks gezeigt. Im Unterschied zur ersten Ausführungsform ist hier die Wandung 20 nur als vergleichsweise schmaler Ring ausgeführt, der in axialer Richtung nicht über den Kugelkopf 16 hinausragt. Auf der Seite der Wandung, die zweilagig ausgeführt ist, ist ein Deckel 28 aufgeschweißt. Auf der anderen Seite der Wandung 20, also an dem Ende, das einlagig ausgeführt ist, ist ein Verstärkungsring 36 angeschweißt. Dieser verhindert auch bei geringer Wandstärke der Wandung 20, daß diese auch bei hohen Belastungen nicht an den axialen Enden des Aufnahmeraumes 18 aufgebogen werden kann und der Kugelzapfen 12 sicher im Aufnahmeraum 18 gehalten ist. Zusätzlich kann der Verstärkungsring 36 zur sicheren Festlegung eines Dichtungsbalges am Kugelgelenk dienen.

## Patentansprüche

1. Kugelgelenk mit einem einen Kugelkopf (16) und einen Anschlußbolzen (14) aufweisenden Kugelzapfen (12), einem von einer Wandung (20) begrenzten Aufnahmeraum (18) für den Kugelzapfen (12) und einem Anschlußbauteil (10) aus Blech, wobei die Wandung (20) des Aufnahmeraumes (18) einstückig mit dem Anschlußbauteil (10) ausgeführt ist und der Aufnahmeraum (18) in axialer Richtung beidseitig offen ist, wobei ein axiales Ende der Wandung (20) zweilagig ausgeführt ist und auf das zweilagige Ende der Wandung (20) ein Deckel(28) aufgeschweißt ist, **dadurch gekennzeichnet, daß** die Wandung (20) des Aufnahmeraumes (18) an beiden axialen Enden radial nach innen gebogen ist, so daß der Kugelzapfen (12) im Aufnahmeraum (18) gehalten ist.

2. Kugelgelenk nach Anspruch 1, **dadurch gekennzeichnet, daß** auf dem Kugelkopf (16) eine Lagerschale (24) montiert ist, und daß der Deckel (28) auf der Lagerschale (24) aufliegt.

3. Kugelgelenk nach Anspruch 1 oder 2, **dadurch gekennzeichnet, daß** die Wandung (20) erhalten ist durch plastisches Verformen derart, daß ein Napf gebildet ist, und anschließendes Ausstanzen des Bodens des Napfes.

4. Kugelgelenk nach einem der vorhergehenden Ansprüche, **dadurch gekennzeichnet, daß** der Kugelzapfen (12) einen Anschlußbolzen (14) aufweist und der Anschlußbolzen (14) durch das Ende des Aufnahmeraumes (18) nach außen ragt, an dem die Wandung (20) des Aufnahmeraumes (18) einlagig ausgeführt ist.

5. Kugelgelenk nach einem der vorhergehenden Ansprüche, **dadurch gekennzeichnet, daß** ein Ring (36) vorgesehen ist, der die Wandung (20) des Aufnahmeraumes (18) an einem axialen Ende umgreift.

6. Kugelgelenk nach Anspruch 5, **dadurch gekennzeichnet, daß** der Ring (36) mit der Wandung (20) des Aufnahmeraumes (18) verschweißt ist.

## Claims

1. A ball joint comprising a ball stud (12) having a ball head (16) and a connecting bolt (14), a receiving space (18) for the ball stud (12) and delimited by a wall (20), and a connection component (10) of sheet metal, the wall (20) of the receiving space (18) being constructed in one piece with the connection component (10), and the receiving space (18) being open on both sides in the axial direction, an axial end of the wall (20) being constructed so as to have two layers, and a cover (28) being welded onto the two-layer end of the wall (20), **characterized in that** the wall (20) of the receiving space (18) is bent radially inwards at both axial ends, so that the ball stud (12) is held in the receiving space (18).

2. The ball joint according to Claim 1, **characterized in that** a bearing shell (24) is mounted on the ball head (16), and that the cover (28) rests on the bearing shell (24).

3. The ball joint according to Claim 1 or 2, **characterized in that** the wall (20) is obtained by plastic deformation such that a cup is formed, and subsequent punching out of the base of the cup.

4. The ball joint according to any of the preceding claims, **characterized in that** the ball stud (12) has a connecting bolt (14) and the connecting bolt (14) projects outwards through that end of the receiving space (18) at which the wall (20) of the receiving space (18) is constructed so as to have a single layer.

5. The ball joint according to any of the preceding claims, **characterized in that** a ring (36) is provided which engages around the wall (20) of the receiving space (18) at an axial end.

6. The ball joint according Claim 5, **characterized in that** the ring (36) is welded to the wall (20) of the receiving space (18).

## Revendications

1. Joint sphérique avec un pivot sphérique (12) présentant une tête sphérique (16) et un boulon de raccord (14), un espace de réception (18) limité par une paroi (20) pour le pivot sphérique (12), et un élément de raccord (10) en tôle, la paroi (20) de l'espace de réception (18) étant réalisée d'un seul tenant avec l'élément de raccordement (10), et l'espace de réception (18) étant ouvert des deux côtés en direction axiale, une extrémité axiale de la paroi (20) étant réalisée en deux couches, et un couvercle étant soudé sur l'extrémité en deux couches de la paroi (20), **caractérisé en ce que** la paroi (20) de l'espace de réception (18) est pliée radialement vers l'intérieur aux deux extrémités axiales de telle sorte que le pivot sphérique (12) est maintenu dans l'espace de réception (18).

2. Joint sphérique selon la revendication 1, **caractérisé en ce que** sur la tête sphérique (16) est montée une coquille de coussinet (24) et **en ce que** le couvercle (28) repose sur la coquille de coussinet (24).

3. Joint sphérique selon la revendication 1 ou 2, **caractérisé en ce que** la paroi (20) est obtenue par déformation plastique de manière à former un godet et par matriçage consécutif du fond du godet.

4. Joint sphérique selon l'une des revendications précédentes, **caractérisé en ce que** le pivot sphérique (12) présente un boulon de raccord (14) et le boulon de raccord (14) fait saillie vers l'extérieur à travers l'extrémité de l'espace de réception (18) au niveau de laquelle la paroi (20) de l'espace de réception (18) est réalisé en une couche.

5. Joint sphérique selon l'une des revendications précédentes, **caractérisé en ce qu'**il est prévu une bague (36) qui entoure la paroi (20) de l'espace de réception (18) à une extrémité axiale.

6. Joint sphérique selon la revendication 5, **caractérisé en ce que** la bague (36) est soudée à la paroi (20) de l'espace de réception (18).
